# EUROPÄISCHE PATENTSCHRIFT

(11) **EP 0 703 337 B1**
(45) Veröffentlichungstag und Bekanntmachung des Hinweises auf die Patenterteilung: **10.03.1999**
(21) Anmeldenummer: 95114296.7
(22) Anmeldetag: 12.09.1995
(51) Int. Cl.: E05C 17/30, F16F 9/02

(54) **Türfeststeller, insbesondere für Kraftwagentüren**
Door stay especially for vehicle doors
Dispositif d'arrêt de porte, notamment pour portes d'automobiles

(30) Priorität: 21.09.1994 DE 4433648
(43) Veröffentlichungstag der Anmeldung: 27.03.1996
(73) Patentinhaber: ED. SCHARWÄCHTER GmbH & Co. KG, D-42809 Remscheid (DE)
(72) Erfinder: Tölle, Karl-Heinz Dipl.-Ing, D-42369 Wuppertal (DE); Grothe, Hermann, D-42857 Remscheicd (DE)
(74) Vertreter: Schön, Theodor, Patent- und Zivilingenieur

(56) Entgegenhaltungen:
- DE-A- 1 459 182
- DE-A- 4 239 681
- DE-A- 4 305 246
- DE-C- 4 239 172

## Beschreibung

Die Erfindung bezieht sich auf einen Türfeststeller für eine Türe, insbesondere zum freigängigen Bewegen einer Kraftwagentüre, in einem ersten Öffnungswinkelbereich und zum stufenlosen Abbremsen und Halten der Türe in beliebigen Öffnungsstellungen in einem zweiten Öffnungswinkelbereich, bestehend aus einem am einen Türanordnungsteil, Tür oder Türrahmen angelenkten Hydraulikzylinder und einer am anderen Türanordnungsteil angelenkten, mit einem innerhalb des Hohlzylinders längsverschieblich angeordneten Feststellkolben starr verbundenen Kolbenstange sowie einem an den Hohlzylinder angeschlossenen Druckspeicher und einer innerhalb des Feststellkolbens untergebrachten Schließkolbenanordnung, zur wechselweisen Freigabe oder Sperrung einer wenigstens einen, die beiden durch den Feststellkolben voneinander getrennten Druckmittelräume des Hydraulikzylinders miteinander verbindenden Durchflußbohrung und wobei innerhalb des Feststellkolbens jeder Strömungsrichtung ein zur Kolbenachse koaxial verschiebbar angeordneter und entegen einer Beaufschlagung mit einer Federlast durch Druckmitteldruck verstellbarer Schließkolben zugeordnet ist wobei die beiden Schließkolben zueinander gegensinnig beweglich angeordnet sind.

Bei einer ersten bekannten Bauart eines solchen Feststellers zum Feststellen von Türen oder Fenstern und dergl. schwenkbeweglichen Teilen in beliebigen Öffnungsstellungen sind in einem einen Hohlzylinder in zwei miteinander verbindbare Druckmittelräume aufteilenden und axial verschiebbaren sowie mittels einer an ihn angeschlossenen Kolbenstange mit der festzustellenden Türe oder dergl. verbundenen Feststellkolben zwei in entgegengesetzten Richtungen druckmittelbeaufschlagbare, als Durchflußregler dienende und Durchflußbohrungen im Kolben wechselweise öffnende oder sperrende Schließkolben eingesetzt, um eine Feststellung der Türe oder dergl. in einer beliebigen Öffnungslage zu erreichen. Die sSchließkolben sind dabei jeweils in Schließrichtung durch eine Federlast beaufschlagt, unter deren Wirkung sie die Durchflußbohrungen sperren, bis durch einen Kraftangriff an der Türe im einen oder anderen der beiden Druckmitträume des Hohlzylinders ein Druckmitteldruck entsteht, der größer ist als die Haltekraft der jeweiligen Belastungsfeder. Unter der Wirkung eines solchen Druckmitteldruckes wird dann der eine der Schließkolben in eine Öffnungsstellung verschoben, in welcher er die ihm zugeordnete Durchflußbohrung im Feststellkolben freigibt, so daß die Tür frei schwenkbar ist, solange an der Türe eine hinreichende Kraft ausgeübt wird. Diese aus der DE-PS 1 459 182 bekannte Bauart eines hydraulischen Feststellers ist zunächst mit dem Nachteil behaftet, daß der Beginn einer Verstellbewegung der Tür ruckartig sein muß, um die Schließkolben in eine Öffnungsstellung zu verbringen, was selbstverständlich keinen für moderne Ansprüche hinreichenden Handhabungskomfort der Türe ermöglicht. Darüberhinaus läßt sich mit einer solcherart gestalteten Bauart eines Feststellers keine sichere Feststellung der Türe unmittelbar nach Beendigung der an der Türe angreifenden Verstellkraft erreichen, da die Federbelastung des Schließkolbens mit Rücksicht auf die Betätigbarkeit der Türe nicht so groß ausgelegt werden kann, daß sie einen nach Aufhören der an der Türe angreifenden Verstellkraft in der Durchflußbohrung vorhandenen restlichen Strömungsmitteldruck überwinden könnte, mit der Folge daß die Türe auch nach Aufhören der an ihr angreifenden Stellkraft noch eine gewisse Schleichbewegung ausführt, insbesondere wenn es sich um eine Kraftwagentüre handelt, die bei auf unebener Fahrbahn stehendem Fahrzeug unter Schwerkraftwirkung ohnehin eine Eigenbewegung auszuführen sucht.

Bei einer anderen aus der DE-PS 42 39 172 bekannten Bauart hydraulischer Feststeller für Türen oder dergl. schwenkbare Teile ist einem einzigen in eine im Feststellkolben vorgesehene Durchflußbohrung eingeschalteten und in Schließrichtung federbelasteten Schließkolben für jede der beiden Strömungsrichtungen eine durch ein Rückschlagventil beherrschte Steuerleitung zugeordnet. Dabei wird durch den mittels der an der Türe angreifenden Stellkraft im einen der beiden Druckmittelräume des Hohlzylinders entstehenden Druckmitteldruck das jeweils zugehörige Rückschlagventil geöffnet, so daß der Schließkolben mit dem im Druckmittelraum herrschenden Druckmitteldruck beaufxschlagt und entgegen der auf ihm lastenden Federbelastung in eine die Durchflußbohrung freigebende Öffnungsstellung verstellt wird. Sobald der Schließkolben die Durchflußbohrung freigegeben hat schließt das der entsprechenden Steuerleitung zugeordnete Rückschlagventil und erfolgt eine Strömung ausschließlich durch die Durchflußbohrung. Bei Aufhören der an der Türe angreifenden Stellkraft herrscht in beiden durch die Durchflußbohrung miteinander verbundenen Druckräumen gleicher Druck, mit der Folge, daß die auf diesem lastenede Federbelastung den Schließkolben nur sehr schleichend in die Schließlage zurückstellen kann, was wiederum zur Folge hat, daß eine exakte und sichere Feststellung der Türe in der vom Benutzer gewählten Öffnungslage nicht gewährleistet werden kann. Zudem ist der Aufbau dieses Feststellers infolge der Notwendigkeit außer einem Schließkolben noch zwei Rückschlagventile einsetzen zu müßen verhältnismäßig aufwendig.

Darüberhinaus läßt keine der beiden bekannten Bauarten von Feststellern einen Freigangbereich der Türe zu, etwa in der Weise, daß die Wirkung des Feststellers erst ab einem gewissen, vorgegebenen Öffnungswinkel der Türe einsetzt.

Der Erfindung liegt daher die Aufgabe zugrunde einen Feststeller der eingangs genannten Bauart dahingehend zu verbessern, daß er bei kleinbauender Gestaltung zur Aufbringung hoher Haltekräfte geeignet und zugleich einerseits mit einem geringstmöglichen technischen und wirtschaftlichen Aufwand herstellbar ist und andererseits bei einem größtmöglichen Betätigungskomfort für die Türe auch deren sichere und bezüglich der vom Benutzer gewählten Öffnungsstellung exakte Feststellung gewährleistet. Darüberhinaus soll bei einer gewollten Türbewegung die Haltewirkung des Feststellers auch mit einer vergleichweise geringen, an der Türe angreifenden Stellkraft überwindbar sein.

Diese Aufgabe wird erfindungsgemäß im Wesentlichen dadurch gelöst, daß der Hydraulikzylinder über einen begrenzten Längenabschnitt hin mit einer den Kolben umgehenden Verbindung zwischen den beiden durch den Feststellkolben voneinander getrennten Druckmittelräumen versehen ist und daß in je einer die beiden Druckmittelräume des Hydraulikzylinders untereinander verbindenden Durchgangsbohrung des Feststellkolbens je einer von zwei Schließkolben angeordnet ist, wobei die Schließkolben hinsichtlich ihrer Schließmittel mehrteilig ausgebildet sind und wenigstens eine axial durchgehende Entlastungsbohrung aufweisen.
Mittels der über einen begrenzten Längenbereich hin im Hydraulikzylinder vorgesehenen und zweckmäßigerweise durch eine Anzahl von Axialnuten in der Zylinderwandung gebildeten Überbrückung des Feststellkolbens wird eine Freigängigkeit des Feststellkolbens über einen vorgegebenen begrenzten Türöffnungswinkel hin bewerkstelligt, insbesondere in der Weise, daß die Türe über einen bestimmten Anfangs-Öffnungswinkel hin absolut widerstandslos, d.h. ohne die Wirkung des Feststellers geöffnet bzw. geschlossen werden kann. Besonders vorteilhaft ist dabei, daß dies erfindungsgemäß ohne zusätzliche Teile erreicht wird.
Die zweite erfindungsgemäße Maßnahme, nämlich in den beiden Schließkolben je eine axial durchgehende Entlastungsbohrung vorzusehen ist zum einen gleichfalls ohne zusätzlichen Aufwand realisierbar und gewährleistet zum anderen eine exakte Festsetzung der Türe in der vom Benutzer jeweils gewählten Öffnungsstellung, in der Weise, daß die Schließkolben beim Stillstand der Türe unter der Wirkung der auf ihnen lastenden Federbelastung sofort in ihre völlige Schließlage einlaufen und somit jedwede Weiterbewegung der Türe verhindern.

In einer bevorzugten Verwirklichungsform ist darüberhinaus als dritte Maßnahme noch vorgesehen, daß die Schließkolben in ihrer Schließlage beide Bereiche einer Durchflußbohrung im Feststellkolben abschließen, wobei die Schließelemente der Schließkolben so ausgebildet sind, daß der Schließkolben durch einen im Hohlzylinder entstehenden Druckmittdruck jeweils nur in einer Richtung verstellbar ist. Dabei sind die Schließkolben axial verschiebbar jeweils in einer Aufweitung einer die beiden durch den Feststellkolben voneinander getrennten Druckmittelräume des Hydraulikzylinders verbindenden Durchflußbohrung angeordnet und verschließen in ihrer Schließlage auf der einen Seite den Zulauf und auf der anderen Seite den Ablauf der Aufweitung der jeweiligen Durchflußbohrung. Um hierbei eine Verstellbarkeit der Schließkolben jeweils nur in einer Richtung zu erzwingen ist erfindungsgemäß weiterhin vorgesehen, daß ein den Zulauf zu der den Schließkolben aufnehmenden Aufweitung bildender Längenabschnitt der Durchflußbohrung zu dieser axial, insbesondere stirnseitig zentral, und ein den Ablauf aus der Aufweitung bildender Teil der Durchflußbohrung radial zur Aufweitung ausgerichtet ist.

In Verbindung mit einer solchen Gestaltung der Durchflußbohrungen im Feststellkolben ist dann erfindungsgemäß weiter vorgesehen, daß die Schließkolben jeweils aus einem zylindrischen Kolbenkörper, der über einen ersten Teil seiner Länge hin an seinem Außenumfang mit axiale Strömungswege bildenden Längsnuten versehen und über einen zweiten Teil seiner Länge hin als zylindrisches Schließteil ausgebildet ist, wobei den Längsnuten des Schließkolbens als Ablauf jeweils eine Anzahl radialer Bohrungen in der Umfangswandung des Feststellkolbens zugeordnet ist und die radialen Bohrung in der Umfangswandung des Feststellkolbens so angeordnet sind, daß eine Überdeckung mit den Längsnuten des Schließkolbens nur dann besteht, wenn sich dieser in seiner Öffnungsstellung befindet. Auf diese Weise ist neben einer einfachen Herstellbarkeit des Schließkolbens zugleich auch dessen saubere Führung innerhalb der Aufweitung der Durchflußbohrung gewährleistet. An seinem dem den Zulauf zu der den Schließkolben aufnehmenden Aufweitung bildenden Längenabschnitt der Durchflußbohrung zugeordneten Ende wirkt der Schließkolben mit einem losen, ein Schließteil des Schließkolbens bildenden Absperrelement zusammen, welches vorzugsweise durch eine Kugel gebildet ist, deren Durchmesser grösser ist als der Durchmesser der Einmündung des den Zulauf bildenden Längenabschnittes der Durchflußbohrung in die Aufweitung.

Zweckmäßigerweise ist dabei vorgesehen, daß der Schließkolben an seiner dem den Zulauf bildenden Längenabschnitt der Durchflußbohrung zugewandten Stirnseite mit einem axial vorspringenden Kragen ausgestattet ist, welcher gegenüber dem Außenumfang des Schließkolbens nach innen zurückgesetzt ist und an die axiale Entlastungsbohrung im Schließkolben anschließt.
Der an die Stirnseite des Schließkolbens angesetzte Kragen bildet dabei zugleich eine Art Kugelkäfig für das als Kugel ausgebildete Absperrelement, wobei die Kugel kleineren Druchmesser aufweist als der Kugelkäfig und innerhalb des Käfigs frei beweglich angeordnet ist, derart, daß die Kugel quer zu dessen Achse beweglich innerhalb des Käfigs aufgenommen ist und sich daher beim Einlaufen des Schließkolbens in seine Schließlage exakt auf die Mündung des den Zulauf bildenden Längenabschnittes der Durchflußbohrung ausrichten kann. Dies gewährleistet, selbst bei verhältnismäßig schwacher Auslegung der dem Schließkolben zugeordneten Federbelastung ein exaktes Absperren der Durchflußbohrung und eröffnet damit die Möglichkeit eines feinfühligen Ansprechens des Feststellers, d.h. für ein gewolltes Weiterbewegen der Türe braucht der Benutzer nur eine geringe Stellkraft an der Türe auszuüben.

In weiterer Ausgestaltung ist ferner vorgesehen, daß der den Zulauf zu der den Schließkoloben aufnehmenden Aufweitung bildende Längenabschnitt der Durchflußbohrung jeweiles mehrere, insbesondere drei, sternförmig angeordnete radial ausgerichtete und in der Umfangswandung des Feststellkolbens endende Bohrungsteile umfaßt, wobei jedem der Bohrungsteile eine dessen Verbindung mit einem der beiden Druckmittelräume des Hydraulikzylinders vermittelnde Axialnut in der Umfangswandung des Feststellkolbens zugeordnet ist. Dadurch ist auf der einen Seite ein ungehinderter Druckmittelzufluß zu den Durchflußbohrungen gewährleistet und auf der anderen Seite zugleich auch eine exalte Führung des Feststellkolbens im Hohlzylinder sicher gestellt. Bevorzugterweise sind die radial gerichteten Bohrungteile der Durchflußbohrung jeweils zur Achse des Feststellkolbens geneigt angeordnet.

Um auf der einen Seite einen gewissen, wählbaren Druckmitteldruck innerhalb des Systemes aufrecherhalten und auf der anderern Seite geringe aber unvermeidliche Druckmittelverluste selbsttätig ausgleichen zu können ist in weiterer Ausgestaltung der Erfindung weiterhin vorgesehen, daß dem Durchtritt der Kolbenstange gegenüberliegend innerhalb des Hohlzylinders und von dessen Druckmittelraum durch eine Trennwand abgegrenzt ein von einem Druckspeicher beaufschlagtes Nachfüllreservoir angeordnet und vermittels eines Rückschlagventiles mit dem angrenzenden Druckmittelraum verbunden ist.

Der Druckspeicher ist vorteilhafterweise durch ein unter einem vorgegebenen Druck stehendes Luftpolster beaufschlagt und sowohl vermittels eines auf einen vorgegebenen Druck eingestellten Überdruckventiles und eine Drosselbohrung als auch in umgekehrter Richtung vermittels eines Rückschlagventiles mit dem benachbarten Druckmittelraum verbunden, wobei das Überdruckventil dem Ausgleich von temperaturbedingten Volumensänderungen des Druckmittels dient, während das Rückschlagventil
Die Erfindung ist in der nachfolgenden Beispielsbeschreibung anhand eines in der Zeichnung dargestellten Ausführungsbeispieles im Einzelnen beschrieben.
In der Zeichnung zeigt die
- Figur 1: eine schematische schaubildliche Darstellung eines erfindungsgemäßen Feststellers;
- Figur 2: einen Längsschnitt durch den Feststeller gemäß Figur 1 im vergrößerten Maßstab;
- Figur 3: eine Seitenansicht eines Schließkolbens;
- Figur 4: eine Stirnansicht des Schließkolbens nach Figur 3;
- Figur 5: einen Querschnitt durch den Feststeller nach Figur 1 und 2;
Zur Bildung eines Feststellers ist ein einen Hydraulikzylinder bildender Hohlzylinder 1 durch einen Feststellkolben 2 in zwei voneinander getrennte Druckmittelräume 3 und 4 unterteilt, wobei der Hohlzylinder 1 in einer in der Zeichnung nicht näher gezeigten Weise am einen Türanordnungsteil, Tür oder Türrahmen, und der Feststellkolben 2 vermittels einer an ihn angeschlossenen Kolbenstange 5 in gleichfalls nicht näher dargestellter Weise am anderen Türanordnungsteil angelenkt ist. Um bei einer Verstellbewegung des Feststellkolbens 2 in beiden Druckmittelräumen 3 und 4 des Hydraulikzylinders 1 gleiche Druckmittelverdrängungen zu erreichen ist die Kolbenstange 5 mit einer über den Feststellkolben 2 hinaus reichenden Verlängerung 6 versehen. Innerhalb des Feststellkolbens 2 sind zwei die beiden Druckmittelräume 3 und 4 untereinander verbindende Durchflußbohrungen 7 und 8 angeordnet, deren jede eine Aufweitung 9 aufweist in welcher jeweils ein den Druckmitteldurchgang freigebender bzw. verschließender Schließkolben 10 gegen die Kraft einer Belastungsfeder 11 axial verschieblich angeordnet ist. Die Durchflußbohrungen 7 und 8 weisen jeweils drei radial und zur Achse des Feststellkolbens 1 geneigt angeordnete Bohrungsteile 12 auf, über welche sie einerseits vermittels am Außenumfang des Feststellkolbens 2 angeordneten axial gerichteten Nuten 13 mit jeweils einem der Druckmittelräume 3 oder 4 in Verbindung stehen, und verfügen andererseits über einen zentral in die jeweilige Aufweitung 10 mündenden Abschnitt 14. Die Aufweitungen 10 der Durchflußbohrungen 7 und 8 sind im gezeigten Ausführungsbeispiel jeweils zylindrisch ausgebildet und nehmen einen gleichfalls im wesentlichen zylindrisch ausgebildeten Schließkolben 10 auf. An ihrem Außenumfang sind die Schließkolben 10 mit über einen Teil ihrer Länge hin durchgehenden Axialnuten 15 versehen, an die sich ein einen Schließteil 16 bildender zylindrischer Abschnitt des Schließkolbens 10 anschließt. Den Axialnuten 15 in den Schließkolben 10 sind in der Umfangswandung des Feststellkolbens 2 angeordnete und in die Axialnuten 13 des Feststellkolbens 2 mündende Radialbohrungen 17 zugeordnet, welche bezüglich der Länge der Aufweitungen 9 so angeordnet sind, daß sie bei in der Schließlage befindlichem Schließkolben 10 durch dessen Schließteil 16 verschlossen sind und lediglich bei in der Öffnungslage befindlichem Schließkolben 10 mit dessen Axialnuten 15 in Überdeckung sind, so daß nur bei in der Öffnungslage befindlichem Schließkolben 10 ein Druckmitteldurchgang durch die Durchflußbohrungen 7 bzw. 8 möglich ist. An ihrer dem Schließteil 16 gegenüberliegenden Stirnseite sind die Schließkolben 10 mit einer zentralen Sacklochbohrung 18 und einem axial gerichteten ihrem Außendurchmesser gegenüber nach innen zurückgesetzten Kragen 19 versehen. Sacklochbohrung 18 und Kragen 19 bilden dabei eine Art Käfig für eine lose angeordnete und ein Absperrelement für die Mündung des Abschnittes 14 der Durchflußbohrung 7 bzw. 8 bildende Kugel 20, deren Druchmesser größer ist als der Durchmesser der Mündung des Abschnittes 14 der Durchflußbohrung 7 bzw. 8 aber auch kleiner ist als der Innendurchmesser von Sacklochbohrung 18 und Kragen 19, so daß sich die Kugel 20 beim Einlaufen des Schließkolbens 10 in seine Schließlage frei auf die Mündung des Abschnittes 14 der Durchflußbohrung 7 bzw. 8 ausrichten und diese sicher und vollständig verschließen kann. Um die Schließkolben 10 beim Einlaufen in ihre Schließendlage von dem sich dadurch in der Ausweitung 9 der Durchflußbohrungen 7 bzw. 8 aufbauenden bzw. erhalten bleibenden Druckmitteldruck zu entlasten sind in den Schließkolben 10 Entlastungsbohrungen 21 mit einem geringen Durchmesser angeordnet. Dadurch ist sicher gestellt, daß die Schließkolben 10 beim Aufhören einer an der Türe angreifenden Stellkraft sofort und vollständig in ihre Schließlage einlaufen und die Türe damit auch exakt in der vom Benutzer ausgewählten Öffnungsstellung gehalten wird. Um eine ungehinderte Freigängigkeit der Türe über einen ausgewählten Öffnungswinkelbereich hin zu erreichen ist in der Innenumfangswandung des Hydraulikzylinders 1 eine den zur Innenumfangswandung hin abdichtetenden zentralen Bereich des Feststellkolbens 2 überbrückende radiale und im gezeigten Ausführungsbeispiel durch wenigstens eine Nut 22 gebildete Umgehung des Feststellkolbens 2 vorgesehen, über welche das Druckmittel drucklos zwischen den beiden Druckmittelräumen 3 und 4 hin-und herströmen kann.
Um einen gewissen wählbaren Druckmitteldruck innerhalb des Systemes aufrecht zu erhalten und zugleich unvermeidliche Druckmittelverluste selbsttätig auszugleichen ist dem Durchtritt der Kolbenstange 5 durch Hydraulikzylinder 1 gegenüberliegend innerhalb des Hohlzylinders 1 und von dessen Druckmittelraum 3 durch eine Trennwand 23 abgegrenzt ein von einem Druckspeicher 24 beaufschlagtes Nachfüllreservoir 25 angeordnet und vermittels eines Rückschlagventiles 26 mit dem angrenzenden Druckmittelraum 3 verbunden. Der Druckspeicher 24 ist durch ein unter einem vorgegebenen Druck stehendes Luftpolster 24 beaufschlagt und vermittels eines auf einen vorgegebenen Druck eingestellten Überdruckventiles 26 und eine Drosselbohrung 27 mit dem Druckmittelraum 3 verbunden, um temperaturbedingte Volumensänderungen des Druckmittels auszugleichen. In umgekehrter Richtung dient ein Rückschlagventil 28 dem Druckmittelrücklauf vom Reservoir zum Druckraum 3.

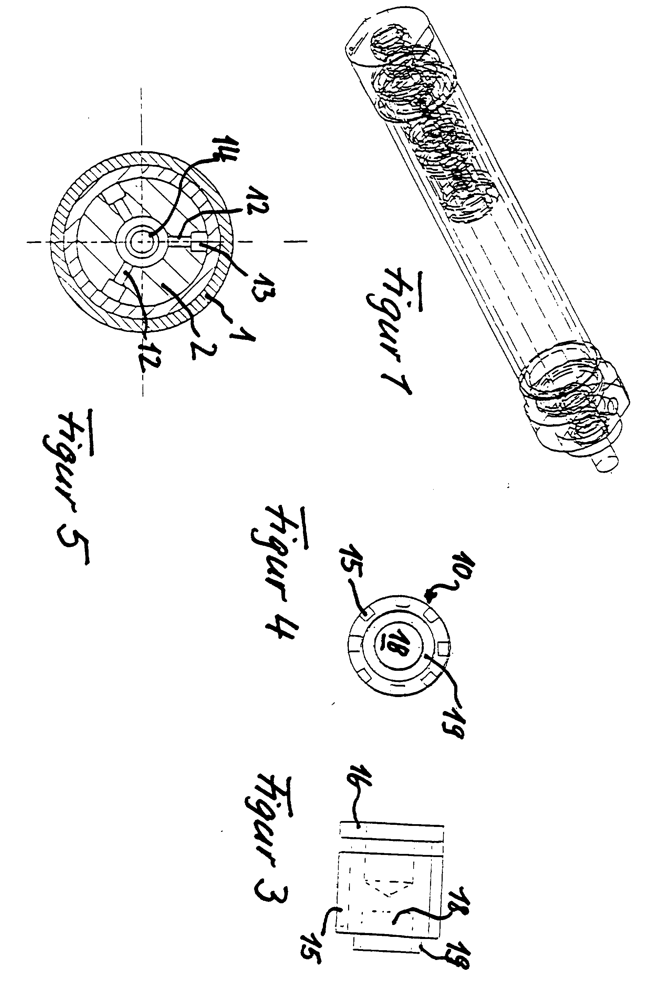

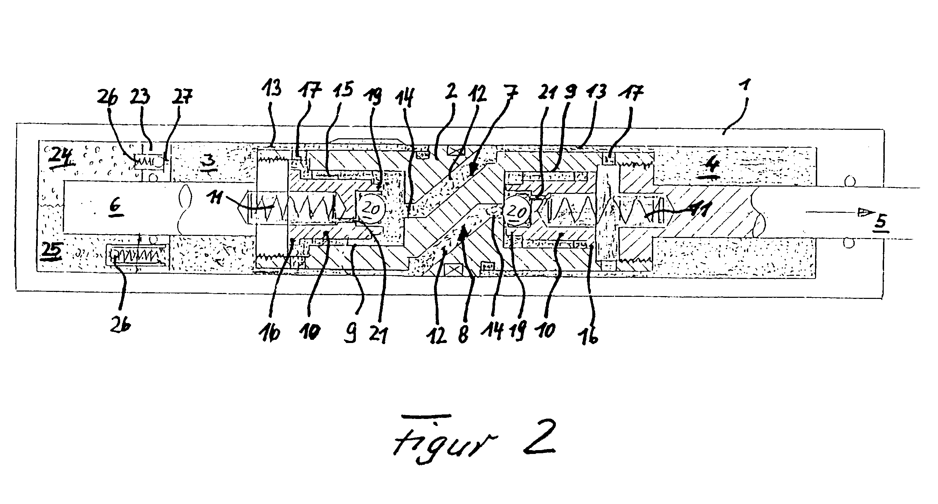

## Patentansprüche

1. Türfeststellerzum freigängigen Bewegen einer Türe, insbesondere Kraftwagentüre, in einem ersten Öffnungswinkelbereich und zum stufenlosen Abbremsen und Halten der Kraftwagentüre in beliebigen Öffnungsstellungen in einem zweiten Öffnungswinkelbereich, bestehend aus einem am einen Türanordnungsteil, Tür oder Türrahmen angelenkten Hydraulikzylinder und einer am anderen Türanordnungsteil angelenkten, mit einem innerhalb des Hydraulikzylinders längsverschieblich angeordneten Feststellkolben (2) starr verbundenen Kolbenstange (5) sowie einem an den Hydraulikzylinder angeschlossenen Druckspeicher (24) und einer innerhalb des Feststellkolbens untergebrachten Schließkolbenanordnung, zur wechselweisen Freigabe oder Sperrung einer wenigstens einen, die beiden durch den Feststellkolben voneinander getrennten Druckmittelräume des Hydraulikzylinders miteinander verbindenden Durchflußbohrung (7, 8) und wobei innerhalb des Feststellkolbens jeder Strömungsrichtung ein zur Kolbenachse koaxial verschiebbar angeordneter und entgegen einer Beaufschlagung mit einer Federlast durch Druckmitteldruck verstellbarer Schließkolben (10) zugeordnet ist wobei die beiden Schließkolben zueinander gegensinnig beweglich angeordnet sind, dadurch gekennzeichnet, daß der Hydraulikzylinder über einen begrenzten Längenabschnitt hin mit einer den Kolben umgehenden Verbindung zwischen den beiden durch den Kolben voneinander getrennten Druckmittelräumen (3, 4) versehen ist und daß in je einer die beiden Druckmittelräume des Hydraulikzylinders untereinander verbindenden Durchgangsbohrung des Feststellkolbens (2) je einer von zwei Schließkolben (10) angeordnet ist, wobei die Schließkolben hinsichtlich ihrer Schließmittel mehrteilig ausgebildet sind und wenigstens eine axial durchgehende Entlastungsbohrung (21) aufweisen.

2. Türfeststeller nach Anspruch 1, dadurch gekennzeichnet, daß die Schließkolben in ihrer Schließlage beide an eine sie aufnehmende Aufweitung anschließende Mündungen einer Durchflußbohrung im Feststellkolben abschließen, wobei die Schließelemente der Schließkolben derart ausgebildet sind, daß der Schließkolben durch einen im Hohlzylinder entstehenden Druckmittdruck jeweils nur in einer Richtung verstellbar ist.

3. Türfeststeller nach Anspruch 1 und 2, dadurch gekennzeichnet, daß die Schließkolben jeweils aus einem zylindrischen Kolbenkörper, der über einen ersten Teil seiner Länge hin mit axialen bei in der Öffnungslage befindlichem Schließkolben Strömungswege für das Druckmittel bildenden Nuten versehen ist und über einen zweiten Teil seiner Länge hin als zylindrischer Schließteil ausgebildet ist, und einem dem dem Schließteil gegenüberliegenden Ende des Kolbenkörpers zugeordneten losen Absperrelement bestehen.

4. Türfeststeller nach Anspruch 1 bis 3, dadurch gekennzeichnet, daß ein den Zulauf zu der den Schließkolben aufnehmenden Aufweitung bildender Längenabschnitt jeder Durchflußbohrung zu dieser axial, insbesondere stirnseitig zentral, und ein den Ablauf aus der Aufweitung bildender Teil der Durchflußbohrung radial ausgerichtet ist, wobei der den Ablauf bildende Teil der Durchflußbohrung durch eine Anzahl radial gerichteter und in Axialnuten an deren Außenumfang des Feststellkolbens mündender Bohrungen gebildet ist.

5. Türfeststeller nach Anspruch 1 bis 4, dadurch gekennzeichnet, daß der Schließkolben an seiner seinem Schließteil gegenüberliegenden Stirnseite mit einem axialen Kragen ausgestattet ist, welcher gegenüber dem Außenumfang des Schließkolbens nach innen zurückgesetzt ist und an die axiale Entlastungsbohrung im Schließkolben anschließt.

6. Türfeststeller nach Anspruch 1 bis 5, dadurch gekennzeichnet, daß der an die Stirnseite des Schließkolbens angesetzte Kragen einen Kugelkäfig für ein als Kugel ausgebildetes Absperrelement bildet, wobei die Kugel innerhalb des Käfigs lose angeordnet ist und einerseits einen kleineren Durchmesser aufweist als der Kugelkäfig, derart, daß die Kugel quer zu dessen Achse beweglich innerhalb des Käfigs aufgenommen ist, andererseits aber einen die lichte Weite der Mündung des den Zulauf bildenden Längenabschnittes der Durchflußbohrung übersteigenden Durchmesser aufweist.

7. Türfeststeller nach Anspruch 1 bis 6, dadurch gekennzeichnet, daß der den Zulauf zu der den Schließkoloben aufnehmenden Aufweitung bildende Längenabschnitt der Durchflußbohrung jeweiles mehrere, insbesondere drei, sternförmig angeordnete radial ausgerichtete und in der Umfangswandung des Feststellkolbens endende Bohrungsteile umfaßt, wobei jedem der Bohrungsteile eine dessen Verbindung mit einem der beiden Druckmittelräume des Hydraulikzylinders vermittelnde Axialnut in der Umfangswandung des Feststellkolbens zugeordnet ist.

8. Türfeststeller nach Anspruch 1 bis 7, dadurch gekennzeichnet, daß die radial gerichteten Bohrungteile der Durchflußbohrung jeweils zur Achse des Feststellkolbens geneigt angeordnet sind.

9. Türfeststeller nach Anspruch 1 bis 8, dadurch gekennzeichnet, daß dem Durchtritt der Kolbenstange durch die Zylinderwandung gegenüberliegend innerhalb des Zylinders ein von einem Druckspeicher beaufschlagtes Nachfüllreservoir angeordnet und vermittels eines Rückschlagventiles mit dem angrenzenden Druckmittelraum verbunden ist.

10. Türfeststeller nach Anspruch 1 bis 8, dadurch gekennzeichnet, daß das Reservoir des Druckspeichers durch ein unter einem vorgegebenen Druck stehendes Luftpolster beaufschlagt ist und in Zulaufrichtung vermittels eines auf einen vorgegebenen Druck eingestellten Überdruckventiles sowie eine Drosselbohrung und in Rücklaufrichtung vermittels eines Rückschlagventiles mit dem benachbarten Druckmittelraum verbunden ist.

## Claims

1. Door arresting device for free-floating movement of a door, in particular a motor vehicle door, in a first opening angle range and for infinitely variable braking and retention of the motor vehicle door in any desired open positions in a second opening angle range, comprising a hydraulic cylinder which is coupled to a door arrangement part, door or door frame, and a piston rod (5) which is coupled to the other door arrangement part and rigidly connected to an arresting piston (2) disposed in a longitudinally displaceable manner inside the hydraulic cylinder, as well as an accumulator (24) connected to the hydraulic cylinder and a closing piston arrangement housed inside the arresting piston, for alternately releasing or blocking an at least one throughflow bore (7, 8), which interconnects the two pressure medium chambers of the hydraulic cylinder which are separated from one another by the arresting piston, and wherein inside the arresting piston there is associated with each flow direction a closing piston, which is disposed so as to be displaceable coaxially with the piston axis and is adjustable by pressure medium pressure counter to the action of a spring load, the two closing pistons being disposed so as to be movable in opposite directions to one another, characterised in that the hydraulic cylinder over a limited portion of its length is provided with a piston-bypassing connection between the two pressure medium chambers (3, 4) separated from one another by the piston and that a respective one of two closing pistons (10) is disposed in a respective through-bore of the arresting piston (2) interconnecting the two pressure medium chambers of the hydraulic cylinder, the closing pistons as regards their closing means being of a multi-part construction and having at least one axially continuous relief bore (21).

2. Door arresting device according to claim 1, characterised in that the closing pistons in their closing position close off both mouths of a throughflow bore in the arresting piston which adjoin a widening accommodating the closing pistons, the closing elements of the closing pistons being designed in such a way that the closing piston is adjustable by a pressure medium pressure arising in the hollow cylinder in each case in one direction only.

3. Door arresting device according to claims 1 and 2, characterised in that the closing pistons in each case comprise a cylindrical piston body, which over a first part of its length is provided with axial grooves which, when the closing piston is in the opening position, form flow paths for the pressure medium and over a second part of its length takes the form of a cylindrical closing part, and a loose shut-off element which is associated with the opposite end of the piston body to the closing part.

4. Door arresting device according to claims 1 to 3, characterised in that a portion of the length of each throughflow bore forming the inlet to the widening accommodating the closing piston is aligned axially, in particular in a frontally central manner relative to said widening and a part of the throughflow bore forming the outlet from the widening is aligned radially, the outlet-forming part of the throughflow bore being formed by a number of radially directed bores opening into axial grooves at their outer periphery of the arresting piston.

5. Door arresting device according to claims 1 to 4, characterised in that the closing piston at its end opposite its closing part is equipped with an axial collar, which is set back in an inward direction relative to the outer periphery of the closing piston and adjoins the axial relief bore in the closing piston.

6. Door arresting device according to claims 1 to 5, characterised in that the collar attached to the end of the closing piston forms a ball cage for a shut-off element in the form of a ball, the ball being disposed loosely inside the cage and on the one hand having a smaller diameter than the ball cage, such that the ball is accommodated inside the cage so as to be movable at right angles to the latter's axis, but on the other hand having a diameter which is greater than the inside width of the mouth of the inlet-forming portion of the length of the throughflow bore.

7. Door arresting device according to claims 1 to 6, characterised in that the portion of the length of the throughflow bore forming the inlet to the widening accommodating the closing piston comprises in each case a stellate arrangement of a plurality of, in particular three, radially aligned bore parts which terminate in the peripheral wall of the arresting piston, there being associated with each of the bore parts an axial groove in the peripheral wall of the arresting piston enabling a connection of said bore part to one of the two pressure medium chambers of the hydraulic cylinder.

8. Door arresting device according to claims 1 to 7, characterised in that the radially aligned bore parts of the throughflow bore are disposed so as to be in each case inclined relative to the axis of the arresting piston.

9. Door arresting device according to claims 1 to 8, characterised in that a top-up reservoir loaded by an accumulator is disposed inside the cylinder opposite the passage of the piston rod through the cylinder wall and is connected by means of a non-return valve to the adjacent pressure medium chamber.

10. Door arresting device according to claims 1 to 8, characterised in that the reservoir of the accumulator is acted upon by an air cushion, which is under a preselected pressure, and is connected in supply direction by a pressure relief valve set at a preselected pressure as well as by a throttle bore and in return direction by a non-return valve to the adjacent pressure medium chamber.

## Revendications

1. Arrêtoir de porte, en particulier pour portes de véhicules automobiles, permettant, d'une part, le mouvement libre de la porte sur une première zone angulaire d'ouverture et, d'autre part, le freinage progressif et le maintien de la porte du véhicule automobile dans des positions d'ouverture quelconques à l'intérieur d'une seconde zone angulaire d'ouverture, ledit arrêtoir se composant
• d'un cylindre hydraulique (1) articulé sur l'une des parties de la porte, à savoir la porte elle-même ou le montant de porte,
• d'une tige de piston (5) articulée sur l'autre partie de la porte et assemblée de manière rigide avec un piston de blocage (2) déplaçable longitudinalement à l'intérieur du cylindre hydraulique (1),
• d'un accumulateur hydraulique (24) raccordé au cylindre hydraulique, et
• d'un dispositif de fermeture à pistons (10), logé à l'intérieur du piston de blocage (2) et destiné à libérer ou obturer alternativement au moins un alésage traversant de passage (7), (8) qui relie entre elles les deux chambres de moyens de pression (3), (4) du cylindre hydraulique, séparées l'une de l'autre par le piston de blocage (2),
à l'intérieur du piston de blocage, un piston de fermeture (10) étant associé à chaque direction de flux de sorte que lesdits pistons (10) de fermeture sont déplaçables grâce à la pression du moyen de pression, en sens opposés l'un par rapport à l'autre, coaxialement à l'axe du piston de blocage (2), à l'encontre de l'effet d'une force de ressort,
*caractérisé en ce que* le cylindre hydraulique (1) est pourvu, sur un segment longitudinal déterminé, d'un élément de liaison entre les deux chambres de pression (3), (4) séparées par le piston de blocage (2), qui contourne ledit piston, et *en ce que* dans chacun des alésages traversants de passage (7), (8) du piston de blocage, qui relient les deux chambres de pression (3), (4), est disposé l'un des pistons de fermeture (10) dont les moyens de fermeture comprennent plusieurs parties et comportent au moins un alésage axial traversant de décharge (21).

2. Arrêtoir de porte selon la revendication 1 *caractérisé en ce que* en position de fermeture, les pistons de fermeture (10) obturent les deux embouchures des alésages traversants du piston de blocage, qui prolongent un élargissement (9) logeant lesdits pistons de fermeture, les parties obturantes des pistons de fermeture étant conformées de telle sorte que les pistons de fermeture ne puissent se déplacer que dans un sens sous la pression du moyen de pression s'établissant dans le cylindre creux (1).

3. Arrêtoir de porte selon les revendications 1 et 2 *caractérisé en ce que* les pistons de fermeture (10) sont constitués, d'une part, de corps cylindriques qui comportent sur une première partie de leur longueur des rainures axiales (15) formant des chemins d'écoulement pour le moyen de pression lorsque les cylindres de fermeture sont en position d'ouverture et dont une seconde partie longitudinale forme une partie obturante (16) cylindrique, et, d'autre part, d'un élément d'obturation mobile (20) coopérant avec l'extrémité du corps du piston, opposée à ladite partie obturante.

4. Arrêtoir de porte selon les revendications 1 à 3 *caractérisé en ce que* un segment longitudinal (14) de chaque alésage traversant de passage (7), (8), qui assure l'entrée dans l'élargissement (9) logeant le piston de fermeture (10), est orienté axialement par rapport audit alésage de passage et disposé au centre par rapport à la face frontale et *en ce que* un segment de chaque alésage traversant de passage (7), (8), qui assure la sortie dudit élargissement (9) est orienté radialement et constitué d'un certain nombres d'alésages radiaux (17) débouchant dans des rainures axiales (13) prévues sur la paroi périphérique du piston de blocage (2).

5. Arrêtoir de porte selon les revendications 1 à 4 *caractérisé en ce que* le piston de fermeture (10) comporte, sur sa face frontale opposée à sa partie obturante (16), un collet axial (19) décalé vers l'intérieur par rapport à sa périphérie et prolongeant l'alésage de décharge (21) prévu dans le piston de fermeture (10).

6. Arrêtoir de porte selon les revendications 1 à 5 *caractérisé en ce que* le collet (19) prévu sur la face frontale du piston de fermeture forme une cage pour l'élément d'obturation constitué d'une bille (20) mobile à l'intérieur de la cage, ladite bille ayant un plus petit diamètre que sa cage de sorte qu'elle puisse se mouvoir perpendiculairement à l'axe de ladite cage, mais le diamètre de ladite bille étant plus grand que le diamètre intérieur de l'embouchure du segment (14) de l'alésage traversant de passage, qui assure l'entrée dans l'élargissement (9).

7. Arrêtoir de porte selon les revendications 1 à 6 *caractérisé en ce que* le segment longitudinal des alésages traversant de passage (7), (8) qui assure l'entrée dans l'élargissement (9) logeant le piston de fermeture, comporte plusieurs, en particulier trois parties disposées en étoile, orientées radialement et débouchant dans la paroi périphérique du piston de blocage, chaque partie desdits alésages (7), (8) étant associée à une des rainures axiales (13) ménagées dans la paroi périphérique du piston de blocage (2) et assurant la liaison entre ladite partie d'alésage et l'une des chambres de pression (3), (4).

8. Arrêtoir de porte selon les revendications 1 à 7 *caractérisé en ce que* les parties radiales des alésages traversants de passage sont inclinées sur l'axe du piston de blocage.

9. Arrêtoir de porte selon les revendications 1 à 8 *caractérisé par* un réservoir de remplissage (25) alimenté par un accumulateur hydraulique (24), disposé à l'intérieur du cylindre hydraulique (1) à l'opposé de l'endroit de passage de la tige de piston (5) à travers la paroi dudit cylindre, et, relié à la chambre de pression voisine par une soupape antiretour (26).

10. Arrêtoir de porte selon les revendications 1 à 8 *caractérisé en ce que* l'accumulateur hydraulique (24) est actionné par un coussin d'air sous une pression prédéterminée et est relié à la chambre de pression voisine, dans le sens de l'arrivée par une soupape de sûreté réglée sur une pression prédéterminée et par un orifice d'étranglement (27), et, dans le sens du reflux par une soupape antiretour (28).
